Europäisches Patentamt

European Patent Office

Office européen des brevets

(11) Publication number: **0 224 188**
**B1**

(12) **EUROPEAN PATENT SPECIFICATION**

(45) Date of publication of the patent specification:
02.11.89

(21) Application number: **86116017.4**

(22) Date of filing: **18.11.86**

(51) Int. Cl.⁴: **F16L 19/06,** F16L 47/04,
F16L 17/02

(54) **A seal joint structure.**

(30) Priority: **28.11.85 JP 267953/85**
**10.04.86 JP 82790/86**
**21.08.86 JP 195841/86**

(43) Date of publication of application:
**03.06.87 Bulletin 87/23**

(45) Publication of the grant of the patent:
**02.11.89 Bulletin 89/44**

(84) Designated Contracting States:
**CH DE FR GB IT LI NL**

(56) References cited:
**EP-A- 0 080 110**
**AU-A- 20 294**
**CH-A- 448 640**
**GB-A- 2 002 079**
**US-A- 2 174 105**
**US-A- 3 829 107**
**US-A- 3 977 708**

(73) Proprietor: **MITSUI & CO., LTD., 2-1,**
**Ohtemachi 1-chome, Chiyoda-ku Tokyo 100(JP)**
Proprietor: **Taga, Jun, 1-10, Minami Ikuta 7-chome**
**Tama-ku, Kawasaki-shi Kanagawa-ken(JP)**

(72) Inventor: **Taga, Jun, 7-1-10, Minami Ikuta, Tama-Ku**
**Kawasaki-shi(JP)**

(74) Representative: **Patentanwälte Viering & Jentschura,**
**Steinsdorfstrasse 6, D-8000 München 22(DE)**

ACTORUM AG

**Description**

This invention relates to a seal joint structure according to the precharacterizing parts of claim 1 and claim 2.

Today, the fluid placed under a high temperature and a high pressure is used in each industrial field and it is usually passed through a pipe line. Particularly in a semiconductor industry, a poisonous fluid is employed under a high temperature as well as a high pressure, and a joint portion in the pipe line must be sealed completely.

Up to now, various techniques concerning the seal joint structure in the pipe line have been proposed. For example, in the NO-A 93 389, an outer circumference of a soft plastic tube is engaged tightly with a toothed metal sleeve. In this case, it is an indispensable factor to select an optimum hardness difference between the soft plastic and the rigid teeth of the metal sleeve, but it is a cumbersome selection. As a matter of fact, it is impossible to prevent leakage of a high temperature fluid from such soft plastic tube.

Further, in the FR-A 1 207 151, a soft thermoplastic resin made sleeve having two sealing lips at its both ends are fitted upon a joint portion of two tubes and a lug projected from a center of the above sleeve is fixed with the joint portion thereof by known means. The two sealing lips are lightly padded on an outer circumference of each tube, and are not extended in an axial direction, so that there is no resistance at the time of taking out each pipe. The above joint portion is sealed mainly by the pressing force of the sleeve. Under such circumstances, it is entirely impossible to obtain a complete seal of a high temperature fluid.

Nowadays, when using a poisonous fluid under a high temperature and pressure, a pipe line and its joint are frequently made of fluorocarbon resins. More particularly, they are mainly polytetrafluoroethylene (PTFE), a copolymer resin (FEP) of tetrafluoroethylene and hexafluoropropylene, a copolymer resin (PFA) of tetrafluoroethylene and perfluorovinylether, etc.

In US-A 3 977 708, there is disclosed a fluorocarbon resin made seal joint, in which a nut having a wedge-type cylindrical ferrule is fitted tightly on a tube, and the cylindrical ferrule having a diameter similar to that of the tube is mounted axially on a surface of the tube. On the other hand, the nut has a screwed portion capable of being engaged with a separate screwed cylinder, whereby the ferrule is fitted tightly on the surface of the tube by means of mutual engagement of both the nut and cylinder.

The disadvantage of this technique is that the ferrule has a seal function as well as a function to prevent the tube from being dismounted, so that it is necessary for the tube to form a grooving right-angled relative to an axis of the tube and it is a very cumbersome work. Therefore, leakage of fluid is caused by inaccuracy of the grooving, so that it is dangerous to apply this technique particularly for large-sized pipes.

AU-A 20 294 discloses some pipe couplings, which are provided with internal flexible flaps as seal means. The flaps which are made of PVC, polyethylene or the like extend longitudinally in the direction of the axis of a pipe being inserted into the coupling and form annular chambers with the pipe. Leakage of the pressure fluid accumulates within the chambers pressing the annular flexible flaps into fluid-tight contact with the pipes. However, it is not useful to take material such as PVC or polyethylene as sealing materials for a fluid having high temperature as well as a higher pressure.

Moreover a fluid-tight contact of the flexible flaps with the pipe is only realized by means of leakage accumulating within the chambers.

As disclosed above, when passing a poisonous fluid of a high temperature and pressure through a pipe line, any conventional joint structure has not attained a complete seal at the joint portion of the pipe line.

The aim of the invention is to realize a seal joint structure according to the precharacterizing parts of claim 1 or claim 2 which realizes an absolutely fluid-tight contact with the pipe without the aid of fluid pressure in case of fluid being under high pressure and temperature.

This aim is realized by the features of the characterizing parts of claim 1 or claim 2. Preferred developments of this invention can be gathered from the subclaims.

These features realize a seal joint structure which brings about a complete airtight fitting between an inner circumference of an annular joint body and an outer circumference of a tubular component to be inserted into the joint body.

More specifically, the seal joint structure comprises an annular joint body and band-like seal means projected radially from an inner circumference of the annular joint body, the band-like seal means being extended logitudinally by a tubular component to be jointed, and fitted airtightly upon and along an outer circumference of the component to be jointed. And, all the aforesaid elements are made of fluorocarbon resins.

Thus, this invention provides a novel seal joint structure which can meet the requirements of a fluid temperature of l50°C at maximum and a pressure of 3.5 kg./cm² at maximum.

Accordingly, this invention is a very useful one that can satisfy the requirements in particularly semiconductor industry, pharamaceutical industry, bio industry or the like.

This will now be further described, by way of embodiments, with reference to the accompanying drawings.

Fig. I is a section view of a first embodiment of a seal joint structure according to this invention, in which an upper traverse section shows a condition of an annular joint prior to its assembling, while a lower traverse section shows a condition thereof after assembling.

Fig. 2 is a section view of a second embodiment, in which an upper traverse section shows a condition of a pipe extended within the joint, while a lower section shows a condition of the pipe shrinked therewithin.

Fig. 3 is a section view of a ring to be fixed between the joint and the pipe in Fig. 2.

Fig. 4 is a section view of a third embodiment, in which a rightside section shows a condition of a pipe extended within the joint, while a leftside section shows a condition of the pipe shrinked therewithin.

Fig. 5 is a section view of a fourth embodiment, in which a rightside section shows a condition of a ring prior to its assembling, while a leftside section shows a condition of the ring after assembling.

Fig. 6 is a section view of a fifth embodiment, in which a rightside section shows a condition of a ring prior to its assembling, while a leftside section shows a condition of the ring after assembling.

Fig. 7 is a section view of a sixth embodiment, in which a ring can also be applied for a shaft of a needle body.

Fig. 8 is a section view of a seventh embodiment.

Fig. 9 is a schematic view of a leakage test device for testing a performance of the seal joint structure of this invention.

Fig. 10 is a schematic view of a test device for testing the function of the extensible pipe in Figs. 2 and 4.

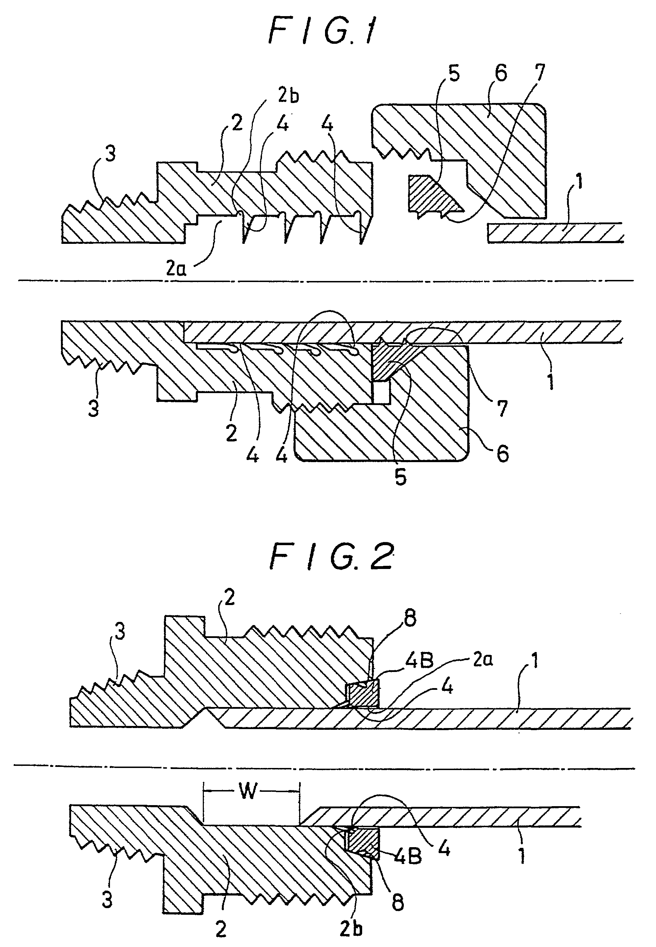

A first embodiment of this invention will now be described with reference to Fig. 1.

In Fig. 1 there is shown a TFE-made pipe (as a component to be jointed) having an outer diameter of 13 mm and an inner diameter of 7 mm. Numeral 2 is an annular joint body for fitting the pipe 1. The joint body 2 has an overall length of 40 mm and a maximum outer diameter of 22 mm. Numeral 3 is a screw thread formed at one end of the joint body 2. Integrally formed on an inner circumference of the joint body 2 are plurality of band-like seal members 4 or fins. These seal members 4 form a plurality of gaps (2a) between one another and each seal member is provided with an annular groove at its root. This root enables to easily insert the pipe and to get easily deformed due to thermal expansion or contraction while using the hard material fluorocarbon resin as seal member material. In this embodiment, the diameter of a maximum inner circumference of the joint body 2 is 16 mm and that of an inner circumference of each seal member 4 is 8 mm. The thickness of a root portion of each seal member 4 is 1.5 mm and that of its front end is 0.2 mm. The seal member 4 shows a wedge type section.

Numeral 5 is a cylindrical grip for fixing the pipe 1 in the joint body 2. The length of the grip 5 is about 5 mm, upon the inner surface of which are formed a plurality of pointed protrusions 7.

An upper section of Fig. 1 shows a condition, in which the pipe 1 is not yet fixed in the joint body 2, while a lower section of Fig. 1 shows a condition, in which the pipe 1 is firmly fixed in the joint body 2. As shown in the lower section thereof, when a cylindrical nut 6 as clamping means is clamped, the cylindrical grip 5 is urged by a tapered portion of the cylindrical nut 6, so that the inner diameter of the cylindrical grip 5 is compressed, thereby the protrusions 7 are engaged and bitten with an outer circumference of the pipe 1.

When employing a tube having a thin wall, it is not always necessary to mount both the cylindrical grip 5 and the cylindrical nut 6, for such a tube is supported by a suitable elasticity of the plurality of seal members 4 which perform the function of a ferrule, thereby disengagement of the tube from the joint body 2 is prevented.

When inserting the pipe 1 into the joint body 2, the plurality of seal members 4 are deformed longitudinally upon and along the outer circumference of the pipe 1. When making the outer diameter of the pipe 1 larger than the distance between the opposing seal members 4 by employing a metal or plastic tapered bougie having a round end, it is very easy to insert the pipe 1 into the joint body 2.

Normally, it is forbidden to use a plastic material for means being subjected to tension and deflection, because this plastic material is not an elastomer except PVC soft resin or the like, which has been softened with a plasticizer.

According to a remarkable aspect of this invention, the pipe 1, the joint body 2 and the wedge type seal members 4 are all made of fluorocarbon resins selected from the group of TFE, PFA or FEP. It is known that the fluorocarbon resins which are a hard plastic material have such excellent properties as elastic memory, heat resistance, impact resistance, chemical resistance, etc.

More specifically, after the band-like seal member 4 of the joint body 2 has been extended longitudinally by the pipe 1, it tends to return to its original dimension due to its elastic memory property. As the temperature of the fluid flowing in the pipe 1 becomes higher, extent of such recovery of the seal member 4 is increased more and more. As a result, once the seal member 4 has been extended, it urges the outer circumference of the pipe 1 in an axial direction thereof, and fits the latter hermetically.

Further, the joint body 2 and the seal members 4 which are made of the same fluorocarbon resin material may be connected to a different plastic pipe, shaft or a metal structure.

Several embodiments of this invention will now be described hereinafter.

Since the material of the seal joint structure and the function of particularly the band-like seal means are the same as those in the following embodiments, their description will be omitted.

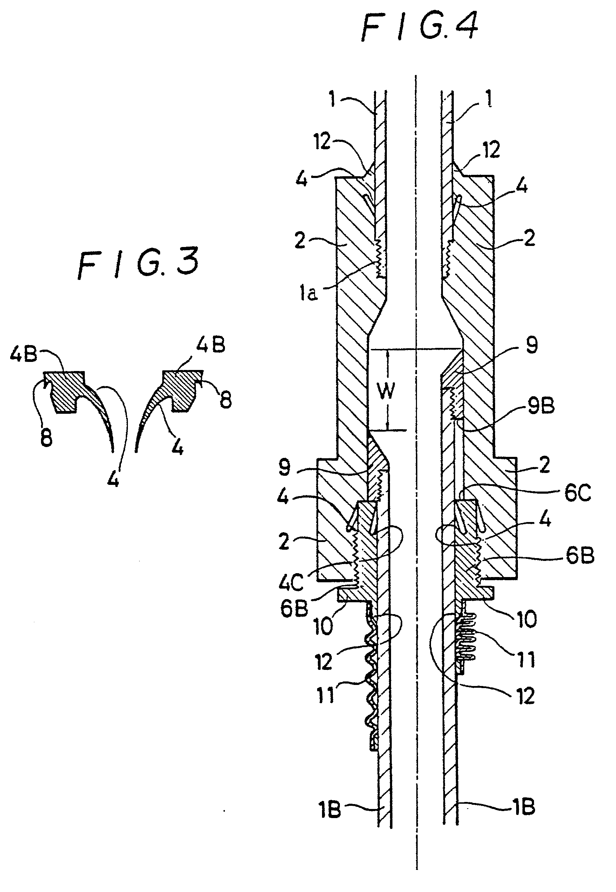

A second embodiment of this invention will be described with reference to Figs. 2 and 3.

An upper section of Fig. 2 shows a condition, in which the pipe 1 is inserted wholly into the bottom of the joint body 2, while a lower section of Fig. 2 shows a condition, in which the pipe 1 is drawn back within the joint body 2. As will be described hereinafter, the pipe 1 is movable within a certain width W. In this embodiments, the joint body 2 is made of PFA and molded by injection molding.

Numeral 4B is a ring which is airtightly fitted in a corner recess of the joint body 2. The ring 4B has the wedge type seal member 4 and a second seal member 8 which are integrally formed upon two sides of the ring 4B. These seal members are provided with an annular groove at it's root which enables to easily insert the pipe and to get easily deformed due to thermal expansion or contraction while using the hard material fluorocarbon resin as seal member material. The ring 4B is made of TFE or PFA and formed by cutting means. The wedge type seal member 4 is airtightly fitted upon and along the outer circumference of the pipe 1, so that any fluid may not be leaked on the outer circumference of the pipe 1.

The second seal member 8 is formed on the outer circumference of the ring 4B in order to seal any gap within the corner recess of the joint body 2.

According to the second embodiment, there is only one the seal member 4 being in contact with the pipe 1, but there may be two or more seal members if the necessity arises.

As shown in Fig. 3, the section of the seal member 4 may be tapered or the length of it may be elongated so as to enlarge an area for fitting the outer circumference of the pipe 1. Thus, a very effective seal is formed.

Further, the ring 4B may be fixed with the joint body 2 by various fixing means (not illustrated) such as heating and melting, spin welding, electromagnetic induction heating or the like.

In general, a plastic material has a large heat expansion ratio. Accordingly, when mounting a plastic pipe in a joint, it is very important to consider its extensibility. In that case, it is necessary to provide the plastic pipe with flexibility or to dispose an extensible passage at a desired portion of the plastic pipe.

According to the second embodiment of this invention, it is not always indispensable to fix the pipe 1 with the joint body 2. That is, when the pipe 1 is inserted into the joint body 2, a strong seal is effected. In addition, the pipe 1 is movable within a predetermined width W. Therefore, the seal joint of this invention performs the function of an extensible joint responsive to heat expansion. The heat expansion of the pipe 1 and the joint 2 arises in their axial direction as well as in their radial direction, but the seal member 4 is extensible airtightly along the outer circumference of the pipe 1, responding to the heat expansion, so that any fluid leakage is prevented.

Further, so that the fluid can flow smoothly in a passage of the pipe 1 and of the joint body 2, an end of the bottom of the joint body 2 as well as an end of the pipe 1 is sloped.

A third embodiment of this invention will be described with reference to Fig. 4.

Since the same numerals as used in the previous embodiments are used in the third embodiment, their description will be omitted.

Numeral 1B is an extensible pipe. A rightside section view shows a condition, in which the pipe 1B is expanded and its front end is extended to a deepest end of the joint body 2, while a leftside view shows a condition, in which the pipe 1B is shrinked and its front end is drawn back downwardly.

As shown in Fig. 4, the front end of the extensible pipe 1B is fixed with a tapered screw socket 9. The outer diameter of the screw socket 9 is somewhat larger than that of the extensible pipe 1B. Therefore, when the pipe 1B is shrinked, a bottom surface 9B of the socket 9 is conflicted with 6C of a sleeve 6B mounted between the joint body 2 and the outer circumference of the pipe 1B, so that the bottom surface 9B of the socket 9 performs the function of a stopper. The sleeve 6B is provided, on its inner circumference, with the wedge type seal member 4. A lower end of the sleeve 6B forms a square or hexagonal head 10 which is used when the sleeve 6B is fixed with the joint body 2. Numeral 11 is a sanitary bellows means fixed with a rear end of the sleeve 6B as well as with a suitable part of the pipe 1B in order that no gap between the sleeve 6B and the pipe 1B may occur. The rear end of the sleeve 6B is also provided with a wedge type seal member 12 for the same sealing purpose.

According to the third embodiment, the pipe 1 (upper section of Fig. 4) and the joint body 2 are fixed with each other by screw means 1a.

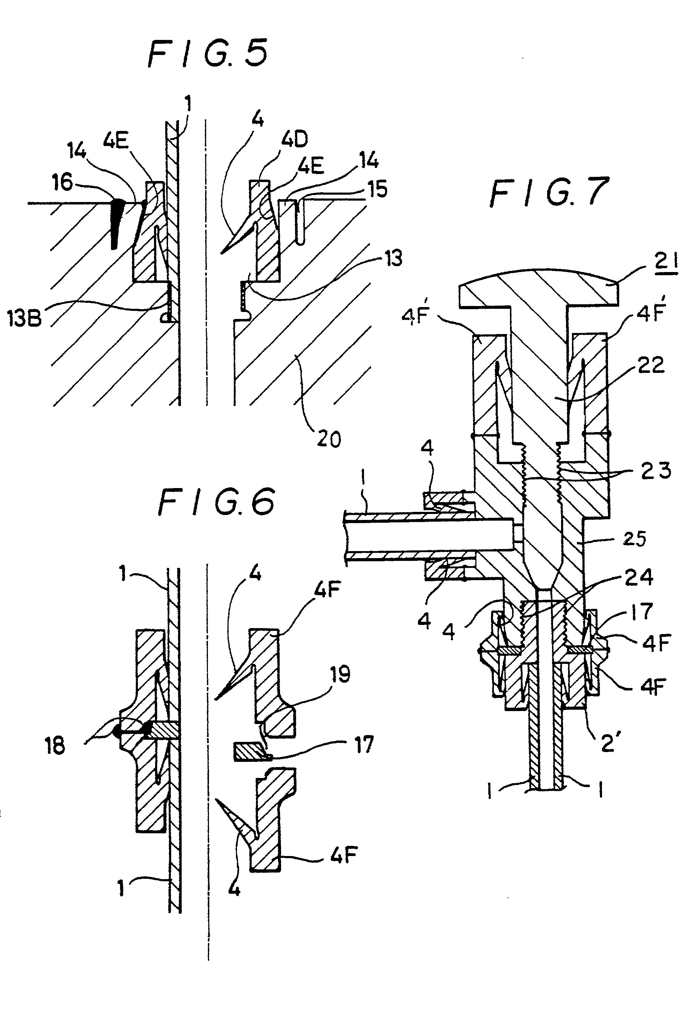

A fourth embodiment of this invention will now be described with reference to Fig. 5.

In Fig. 5, the pipe 1 is inserted into, and fixed with a recess 13 of a fixing body 20 such as a TFE-made pump, valve, cartridge filter housing or the like.

A leftside section view of Fig. 5 shows a condition, in which the pipe 1 sealed by a ring 4D is fixed in the recess 13. Numeral 4E is a tapered shoulder of the ring 4D. Numeral 14 is a ring type protrusion formed on the fixing body 20. Numeral 15 is a circular groove formed adjacent the protrusion 14.

Means for fixing the ring type protrusion 14 with the ring 4D will now be described.

First of all, a heated ring (not illustrated) is inserted in the groove 15, thereby the protrusion 14 is fused. Then, the shoulder 4E is fixed with the protrusion 14 by a suitable caulking means. Or, a fused resin may be anchored in the groove 15. In the leftside view of Fig. 5 there is shown a fused portion 16.

It is not always necessary to form the protrusion 14. The ring 4D and a wall of the recess 13 may be fixed with each other by screw means. As shown in the leftside view of Fig. 5, the pipe 1 and a lower side of the recess 13 are fixed with each other by screw means 13B.

A fifth embodiment of this invention will be described with reference to Fig. 6.

In Fig. 6, the screw thread 3 in Fig. I has been removed. A rightside section of Fig. 6 shows a condition, in which the pipe I is not yet fixed in a ring 4F having two wedge type seal member 4. The ring 4F is divided into two segments which are injection-molded. The ring 4F is, on its inner circumference, provided with two seal members 4. Numeral I7 is a ring which is mounted between the two segments. The ring I7 is effective to perform the function of a stopper when two pipes I have been inserted into the ring 4F. The two segments and the ring I7 are united into one integral part by welding means or the like.

Numeral I8 is a resin relieved portion at the time of welding. Such ring I7 as a stopper should be disposed on a cross joint, a joint having a different diameter or the like. Numeral I9 is a cutaway portion, in which a fused resin is solidified, thereby any excessive fused resin does not flow inside the ring 4F.

A sixth embodiment of this invention will now be described with reference to Fig. 7.

Fig. 7 shows an application of this invention.

Numeral 2I is a needle valve having a shaft 22. Numeral 23 is a screw thread formed on a lower part of the shaft 22.

In order to prevent any leakage of fluid, a ring 4F' having the wedge type seal member 4 surrounds airtightly an outer circumference of the shaft 22. The seal member 4 has the same seal function as mentioned previously. Numeral 2' is a modified joint body having the wedge type seal member 4. Numeral 24 is a conventional screw thread. In order to prevent any fluid from being leaked from the screw thread 24 area, the ring 4F in Fig. 6 is fitted airtightly on a housing 25 as well as on the joint body 2'.

It is therefore to be understood from the above that the seal joint structure of this invention can be fitted not only on a tubular component such as a pipe, but also on a columnar component such as a solid shaft.

It is also to be understood from the above that each of the ring 4B, 6B, 4D, 4F and 4F' in respective embodiments constitutes means for clamping or supporting the tubular or columnar component to be inserted into the joint body.

The following shows several leak tests of the seal joint structure according to this invention.

A performance test device is shown in Fig. 7, of which main specification are as follows:

Oil bath: Type SYK-387-DHS made by SANYO CO., LTD.

200 V × 5 KW × 300°C max.

Silicone oil KF-965 was employed.

Bellows tube for heat exchange:
Copper tube: diameter 6 mm
spiral winding
dipped length: about 5 mm
Pressure gauge: Bourdon tube (Max. 10 kg/cm² G)
Piping: copper tube (outer diameter 6 mm)
Fluid: city water (5 kg/cm²)
Used joint: Joint as shown in Fig. 1.
Thickness of a root portion of a fin (disc type): 1.6 mm
Inner diameter of the fin: 8 mm
Inclination angle of the fin: 35°
Number of fins: 2 pieces
**Distance between two fins:** I5 mm
Outer circumference is kept in a heated condition.
**Pipe:** Outer diameter I3 mm
Thickness 3 mm
Made of TFE

Test I

The temperature of the oil bath was II5°C and that of the fluid at a line outlet was 95°C. At the outlet a steam containing drain was jetted continuously.

Table I shows a test result of the joint according to this invention.

Table 1

| Opening degree of valve | Lapse of time | Pressure kg/cm$^2$ | Leakage | Result |
|---|---|---|---|---|
| Inlet is open slightly | 3'30" | 0.8 | None | Passed |
| | 4'50" | 1.0 | None | Passed |
| Outlet and inlet are open slightly | 7'20" | 2.0 | None | Passed |
| | 7'40" | 4.0 | None | Passed |
| | 10'50" | 4.8 | None | Passed |

Remarks:
3'3" means 3 minutes and 30 seconds. In the same way, the time of lapse is described hereinafter.

Remarks: 3'30" means 3 minutes and 30 seconds. In the same way, the time of lapse is described hereinafter.

Test 2

The test line was left for l03 hours at it ran. After that, a heating test was conducted again. The temperature of the oil bath was l30°C and the steam at the line outlet was jetted continuously.

Table 2

| Opening degree of valve | Lapse of time | Pressure kg/cm$^2$ | Leakage | Result |
|---|---|---|---|---|
| Inlet is open slightly | 5'20" | 4.0 | None | Passed |
| Intlet and outlet are open slightly | 3 hours continued | 4.0 | None | Passed |
| | 12 hours continued | 4.8 | None | Passed |
| | 24 hours continued | *2.0–4.8 | None | Passed |

* 6 times pressure variation tests were conducted.

Test 3 and 4

Test 3 was conducted after Test 2. The test line was left for five days at a room temperature. After that, it was heated again. The temperature of the oil bath was raised to l50°C. The steam was jetted continuously at the line outlet. Test 4 shows a case, in which the lapse of time was 2 weeks.

Table 3

| Opening degree of valve | Lapse of time | Pressure kg/cm$^2$ | Leakage | Result |
|---|---|---|---|---|
| Intlet and outlet are open slightly | one week | 2.0–4.8 | None | Passed |
| | two weeks | 4.8 | None | Passed |

Test 5 and 6

The pipe which was used for Tests I to 4 was disconnected from the joint and replaced with a new one of the same type. In Test 5 the temperature of the oil bath was l30°C, while in Test 4 that of the oil bath was l50°C.

### Table 4

| | Opening degree of valve | Lapse of time | Pressure kg/cm$^2$ | Leakage | Result |
|---|---|---|---|---|---|
| Test 5 | Inlet and outlet are open slightly | 10'20" | 1.0–4.8 | None | Passed |
| | | 1 week continued | 2.0–4.8 | None | Passed |
| Test 6 | Inlet and outlet are open largely | 5'10" | 0.6–0.0 | None | Passed |
| | | ** | | None | Passed |
| | Inlet and outlet are open slightly (re-heating) | 1 week continued | * 2.0–4.8 | None | Passed |
| | | 2 weeks continued | 4.8 | None | Passed |

\* Movable irregularly.
\*\* The temperature of the liquid at the outlet was decreased rapidly to 27°C.

### Test 7

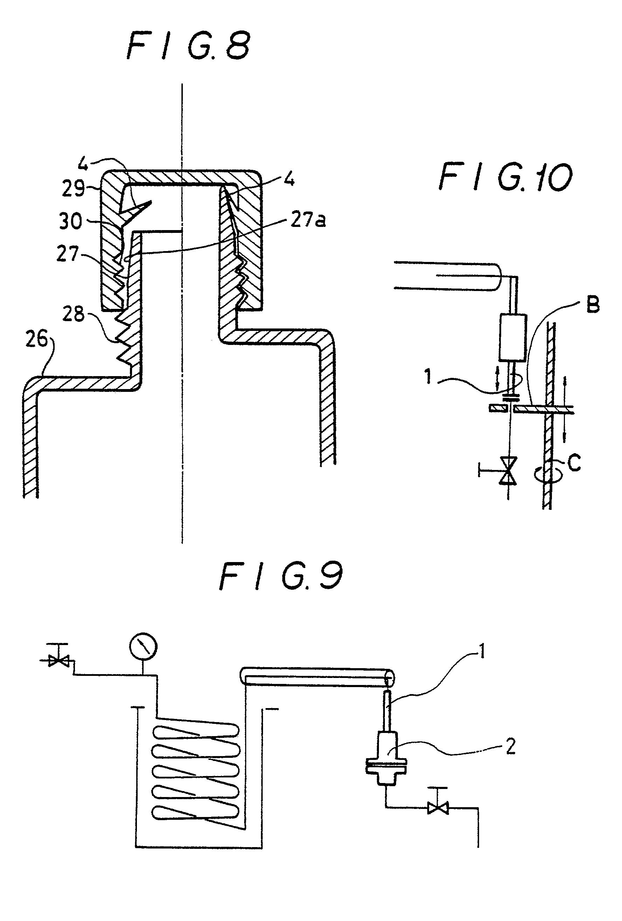

A liquid inlet as shown in Figs. 2 and 4 was fixed on an upper portion (as shown in Fig. 8). The pipe 1 having a flange is connected with a drain pipe. A perforated movable disc B was moved upwardly and downwardly by rotating screw means C.

The test result of such a joint is shown in Table 5. The temperature of an extensible pipe was 0.5 mm/second. The moving cycyle was as follows:
(a) 5 times (b) 7 times (c) 20 times (interval was not constant.) (d) 12 times by five minutes interval.

### Table 5

| | Temperature of oil bath | Lapse of time | Pressure kg/cm$^2$ | Moving distance | Leakage | Result |
|---|---|---|---|---|---|---|
| (a) | 120°C | 20 hours | 2.0–3.0 | 0–22(25)* | None | Passed |
| (b) | 130°C | 24 hours | 3.0–4.0 | 0–22(25)* | None | Passed |
| (c) | 140°C | 1 week | 3.0–4.0 | 0–22(25)* | None | Passed |
| (d) | 140°C | 1 hour | 4.0 | 0–22(25)* | None | Passed |

\* The joint in Fig. 4 was used. It has an extensible joint with a stopper.

### Test 8

The seal joint strucure in Figs. 5 and 6 have been tested as to whether any leakage has occurred. When employing a pipe of a wall thickness of 3 mm, it has been confirmed that only one seal member is sufficient for seal purposes. In this case, the grip 5 and the nut 6 in the first embodiment have been removed. It has also been found that no leakage from any welded part of the rings 4E, 4F has occurred.
The temperature of the
oil bath: l20°C to l48°C
Used pipe:
Made of PFA, l/2 inches
Outer diameter: l2.7 mm
Inner diameter: l.5 mm

## EP 0 224 188 B1

Table 6

| Opening degree of valve | Temperature °C | Lapse of time | Pressure | Leakage | Stess for drawing the pipe | Result | Remarks |
|---|---|---|---|---|---|---|---|
| Input and output are open slightly | 120 | 10 hours | 2.0 | None | – | Passed | The pipe in Fig. 1 was inserted by using a bougie. |
| | 135 | 20 hours | 4.0 | None | About 60 kg | Passed | After cooling, the pipe is removed by hand. |
| | 140 | 12 hours | 3.5 | None | – | | It was easy to insert a new pipe. |
| | 148 | 1 week continued | 3.0 | None | About 50 kg | Passed | After the test has ended, the pipe was removed. Stress was lower than that in Fig. 1. |

It has been found that after each pipe has been removed from the joint body, the outer diameter of each pipe has been shrinked by about l0% over that of its original pipe prior to mounting. It is presumed that the outer diameter of it has been shrinked by a stress resistance at the time of removal. It proves that the wedge type seal member has a tight fitting force relative to the outer diameter of the pipe.

Further, the outer diameter of the pipe at a front part which is not fitted by the seal member has been shrinked about l.5% over that of its original pipe. It is considered that such shrinkage has been caused by a certain resistance of the seal member. Thus, it has been found that no substantial reduction of flow rate has occurred because a flow passage section is decreased very small.

When the pipe having a thin wall was inserted into the joint body, the clamping means 5, 6, 7 in Fig. l were omitted, but the joint body had a very effective sealing function and a high durability. Further, it has been proved that there was no leakage of fluid from any fused parts in Figs. 5, 6 and 7.

A seventh embodiment of this invention will be described with reference to Fig. 8, in which there is shown a seal joint structure for sealing a neck and its opening of a bottle to be filled with e.g. toxicant.

Numeral 26 is a bottle body having a neck 27 provided with screw threads 28 at its root. The neck 27 forms a tapered portion 27a toward its opening. Numeral 29 is a cap to be engaged with the neck 27 and integrally provided with the band-like seal member 4. The cap 29 also forms screw threads 30 at its lower portion, which can engage with the screw threads 28 of the neck 27. A leftside section view of Fig. 8 shows a condition, in which the cap 29 is not yet engaged with the neck 27, while a rightside section view thereof shows a condition, in which the former has already been engaged with the latter.

When the cap 29 fits the neck 27 and the former is rotated, then both the screw threads 28 and 30 are engaged with each other. At the same time, the band-like seal member 4 is extended longitudinally by the tapered portion 27a of the neck 27 and fitted airtightly upon and along an outer circumference of the tapered portion 27a. As discussed previously, the fluorocarbon resin made seal member 4 performs a complete sealing function due to its elastic memory property.

According to this embodiment, it is not an indispensable factor to form both the screw threads 28, 30. It should be appreciated that the neck 27 can be sealed by means of only the band-like seal member 4.

According to a remarkable aspect of this invention, the elastic memory property of the fluorocarbon resins is utilized effectively. That is, a wedge type and band-like seal member of the joint body is extended longitudinally by a component to be jointed, thereby it urges the outer circumstance of the pipe 1 in an axial direction, and fits the latter hermetically.

Accordingly, it is unnecessary to clamp the pipe by making use of a certain tool having a powerful clamping force.

The seal joint structure of this invention enjoys a valuable industrial utility in the pipe line for passing fluids therethrough particularly under a high temperature and pressure.

## Claims

1. A seal joint structure, made of a thermo-plastic material, to joint two pipes (1, 1) or a pipe and another component, comprising an annular joint body (2) into which the end of said pipe is inserted whose outer circumferential surface is radially spaced from the inner circumferential surface of said annular joint body in a manner such, that a gap (2a) is formed between the outer surface of said pipe and the inner circumferential surface of the annular joint body; whereat at least one integrally formed wedge-shaped seal lip (4) projects inwardly from said inner circumferential surface before the pipe (1) has been inserted, while the free end portion of said wedge-shaped seal lip (4) extends longitudinally in direction of the axis of said pipe after the pipe (1) has been inserted and contacts the outer circumferential surface of the pipe, while leaving a gap between the seal lip (4) and said inner circumferential surface of the joint

8

EP 0 224 188 B1

body (2), whereby said annular joint body (2) seals with respect to said pipe only by means of said wedge-shaped seal lip (4) and the end of said pipe is movable axially with respect to said annular joint body (2) due to thermal expansion or contraction of the pipe (1) and the annular joint body (2), while said seal lip maintains a complete sealing of said pipe with respect to said annular joint body during said axial movement, characterized in that the seal joint structure is made of fluorocarbon resin and an annular groove (2b) is formed at the root of said wedge-shaped seal lip (4) enabling it to be easily deformed when the radial spacing between said pipe (1) and said inner circumferential surface of the joint body (2) changes due to thermal expansion or contraction.

2. A seal joint structure, made of a thermo-plastic material to joint two pipes (1, 1) or a pipe and another component, comprising an annular joint body (2) with an annular recess into which a ring (4b) is inserted, while the end of said pipe is inserted into the ring and the annular joint body and the outer circumferential surface of the pipe is radially spaced from the inner circumferential surface of said ring in a manner such, that a gap (2a) is formed between the outer circumferential surface of said pipe and the inner circumferential surface of the ring; whereat at least one integrally formed wedge-shaped seal lip (4) projects inwardly from said inner circumferential surface before the pipe (1) has been inserted, while the free end portion of said wedge-shaped seal lip (4) extends longitudinally in direction of the axis of said pipe after the pipe (1) has been inserted and contacts the outer circumferential surface of the pipe, while leaving a gap between the seal lip (4) and said inner circumferential surface of the joint body (2), whereby said ring (4b) seals with respect to said pipe only by means of said wedge-shaped seal lip and the end of said pipe is movable axially with respect to said annular joint body (2) due to thermal expansion or contraction of the pipe and the annular joint body (2), while said seal lip maintains a complete sealing of said pipe with respect to said annular joint body during said axial movement, characterized in that the seal joint structure is made of fluorocarbon resin and an annular groove (2b) is formed at the root of said wedge-shaped seal lip (4) enabling it to be easily deformed when the radial spacing between said pipe (1) and said inner circumferential surface of the ring (4b) changes due to thermal expansion or contraction.

3. A seal joint structure according to claim 1, characterized in that sealing is realized by a plurality of wedge-shaped seal lips (4) being axially spaced from each other.

4. A seal joint structure according to claim 2, characterized in that the integrally formed wedge-shaped seal lips (4) are formed at the inner and the outer circumferential surface of said ring, respectively.

5. A seal joint structure according to any of the preceding claims, characterized in that the seal lips extend radially before the pipe (1) has been inserted.

## Patentansprüche

1. Dichtendes Verbindungsstück aus thermoplastischem Material, zum Verbinden zweier Rohre (1, 1) oder eines Rohres und eines anderen Bauteiles, mit einem ringförmigen Verbindungskörper (2), in welchen das Ende des Rohres eingesetzt ist, dessen äußere Umfangsfläche radial von der inneren Umfangsfläche des ringförmigen Verbindungskörpers derart beabstandet ist, daß zwischen der äußeren Fläche des Rohres und der inneren Umfangsfläche des ringförmigen Verbindungskörpers eine Lücke (2a) gebildet ist; wobei vor dem Einsetzen des Rohres (1) wenigstens eine einstückig angeformte, keilförmige Dichtlippe (4) von der inneren Umfangsfläche nach innen ragt, während nach dem Einsetzen des Rohres (1) der freie Endabschnitt der keilförmigen Dichtlippe (4) sich in Längsrichtung der Rohrachse erstreckt und die äußere Umfangsfläche des Rohres unter Freilassung einer Lücke zwischen der Dichtlippe (4) und der inneren Umfangsfläche des Verbindungskörpers (2) berührt, wodurch der ringförmige Verbindungskörper (2) gegenüber dem Rohr nur mittels der keilförmigen Dichtlippe (4) abdichtet und das Ende des Rohres bezüglich des ringförmigen Verbindungskörpers (2) bei einer thermisch bedingten Ausdehnung oder Zusammenziehung des Rohres (1) und des ringförmigen Verbindungskörpers (2) axial beweglich ist, während die Dichtlippe eine vollständige Abdichtung des Rohres gegenüber dem ringförmigen Verbindungskörper während der axialen Bewegung aufrechterhält, dadurch gekennzeichnet, daß das dichtende Verbindungsstück aus Fluorkunststoff besteht und am Fuß der keilförmigen Dichtlippe (4) eine ringförmige Nut (2b) ausgebildet ist, aufgrund deren die Dichtlippe leicht verformt werden kann, sobald der radiale Abstand zwischen dem Rohr (1) und der inneren Umfangsfläche des Verbindungskörpers (2) sich infolge thermischer Ausdehnung oder Zusammenziehung ändert.

2. Dichtendes Verbindungsstück aus thermoplastischem Material, zum Verbinden zweier Rohre (1, 1) oder eines Rohres und eines anderen Bauteiles, mit einem ringförmigen Verbindungskörper (2) mit einer ringförmigen Ausnehmung, in welche ein Ring (4b) eingesetzt ist, während das Ende des Rohres in den Ring und den ringförmigen Verbindungskörper eingeführt ist und die äußere Umfangsfläche des Rohres radial von der inneren Umfangsfläche des Ringes derart beabstandet ist, daß zwischen der äußeren Umfangsfläche des Rohres und der inneren Umfangsfläche des Ringes eine Lücke (2a) gebildet ist; wobei vor dem Einsetzen des Rohres (1) wenigstens eine einstückig angeformte, keilförmige Dichtlippe (4) von der inneren Umfangsfläche nach innen ragt, während nach dem Einsetzen des Rohres (1) der freie Endabschnitt der keilförmigen Dichtlippe (4) sich in Längsrichtung der Rohrachse erstreckt und die äußere Umfangsfläche des Rohres unter Freilassung einer Lücke zwischen der Dichtlippe (4) und der inneren Umfangsfläche des Verbindungskörpers (2) berührt, wodurch der Ring (4b) gegenüber dem Rohr

9

nur mittels der keilförmigen Dichtlippe (4) abdichtet und das Ende des Rohres bezüglich des ringförmigen Verbindungskörpers (2) bei einer thermisch bedingten Ausdehnung oder Zusammenziehung des Rohres (1) und des ringförmigen Verbindungskörpers (2) axial beweglich ist, während die Dichtlippe eine vollständige Abdichtung des Rohres gegenüber dem ringförmigen Verbindungskörper während der axialen Bewegung aufrechterhält, dadurch gekennzeichnet, daß das dichtende Verbindungsstück aus Fluorkunststoff besteht und am Fuß der keilförmigen Dichtlippe (4) eine ringförmige Nut (2b) ausgebildet ist, aufgrund deren die Dichtlippe leicht verformt werden kann, sobald der radiale Abstand zwischen dem Rohr (1) und der inneren Umfangsfläche des Ringes (4b) sich infolge thermischer Ausdehnung oder Zusammenziehung ändert.

3. Dichtendes Verbindungsstück nach Anspruch 1, dadurch gekennzeichnet, daß die Dichtung durch eine Mehrzahl keilförmiger Dichtlippen (4) verwirklicht ist, die axial voneinander beabstandet sind.

4. Dichtendes Verbindungsstück nach Anspruch 2, dadurch gekennzeichnet, daß die einstückig angeformten keilförmigen Dichtlippen (4) jeweils an der inneren und der äußeren Umfangsfläche des Ringes ausgebildet sind.

5. Dichtendes Verbindungsstück nach einem der vorhergehenden Ansprüche, dadurch gekennzeichnet, daß die Dichtlippen sich vor dem Einsetzen des Rohres (1) radial erstrecken.

**Revendications**

1. Structure de raccordement étanche dans un matériel thermoplastique, pour raccorder deux tuyaux (1, 1) ou un tuyau et un autre composant, comprenant un corps annulaire de raccordement (2) pour recevoir le bout dudit tuyau et dont la surface circonférentielle extérieure est espacée radialement par rapport à la surface circonférentielle intérieure dudit corps annulaire de raccordement dans une manière telle qu'un espace vide (2a) est défini entre la surface extérieure dudit tuyau et la surface circonférentielle intérieure dudit corps annulaire de raccordement, où au moins une nervure d'étanchéité (4) à section cunéiforme et faisant partie intégrale dudit corps annulaire de raccordement s'étend vers l'intérieur à partir de ladite surface circonférentielle intérieure avant l'introduction dudit tuyau (1) pendant que ladite partie terminale libre de ladite nervure d'étanchéité (4) s'étend longitudinalement dans le sens de l'axe dudit tuyau après l'introduction dudit tuyau (1) et fait contact avec la surface circonférentielle extérieure dudit tuyau tout en laissant un vide entre la nervure d'étanchéité (4) et ladite surface circonférentielle intérieure dudit corps de raccordement (2), de telle manière que ledit corps annulaire de raccordement (2) établit un joint par rapport audit tuyau uniquement à travers ladite nervure d'étanchéité (4) et le bout dudit tuyau peut se déplacer axialement par rapport audit corps annulaire de raccordement (2) suite à l'expansion ou rétraction thermique dudit tuyau (1) et le corps annulaire de raccordement (2), pendant que ladite nervure d'étanchéité maintient une étanchéité parfaite dudit tuyau par rapport audit corps annulaire de raccordement pendant ledit déplacement axial, caractérisée en ce que la structure de raccordement étanche est dans une résine de fluorocarbone et une rainure annulaire (2b) est formée à la racine de chaque nervure d'étanchéité permettant à cette dernière de se déformer facilement quand il y a un changement dans l'écartement radial entre ledit tuyau (1) et ladite surface circonférentielle inférieure dudit corps de raccordement (2) suite à une expansion ou rétraction thermique.

2. Structure de raccordement étanche dans un matériel thermoplastique pour raccorder deux tuyaux (1, 1) ou un tuyau et un autre composant, comprenant un corps annulaire de raccordement (2) avec un évidement annulaire pour recevoir une bague (4b), pendant que le bout dudit tuyau s'insère entre la bague et le corps annulaire de raccordement et la surface circonférentielle extérieure du tuyau est espacée radialement par rapport à la surface circonférentielle intérieure de ladite bague dans une manière telle qu'un espace vide (2a) est défini entre la surface circonférentielle extérieure dudit tuyau et la surface circonférentielle intérieure de la bague, où au moins une nervure d'étanchéité (4) à section cunéiforme et faisant partie intégrale dudit corps annulaire de raccordement s'étend vers l'intérieur à partir de ladite surface circonférentielle intérieure avant l'introduction dudit tuyau (1) pendant que ladite partie terminale libre de ladite nervure d'étanchéité (4) s'étend longitudinalement dans le sens de l'axe dudit tuyau après l'introduction dudit tuyau (1) et fait contact avec la surface circonférentielle extérieure dudit tuyau tout en laissant un vide entre la nervure d'étanchéité (4) et ladite surface circonférentielle intérieure dudit corps de raccordement (2), de telle manière que ladite bague (4b) établit un joint par rapport audit tuyau uniquement à travers ladite nervure d'étanchéité (4) et le bout dudit tuyau peut se déplacer axialement par rapport audit corps annulaire de raccordement (2) suite à l'expansion ou rétraction thermique dudit tuyau (1) et le corps annulaire de raccordement (2), pendant que ladite nervure d'étanchéité maintient une étanchéité parfaite dudit tuyau par rapport audit corps annulaire de raccordement pendant ledit déplacement axial, caractérisée en ce que la structure de raccordement étanche est dans une résine de fluorocarbone et une rainure annulaire (2b) est formée à la racine de chaque nervure d'étanchéité permettant à cette dernière de se déformer facilement quand il y a un changement dans l'écartement radial entre ledit tuyau (1) et ladite surface circonférentielle inférieure de la bague (4b) suite à une expansion ou rétraction thermique.

3. Structure de raccordement étanche selon la revendication 1, caractérisée en ce que l'étanchéité est assurée par une pluralité de nervures d'étanchéité à section cunéiforme (4) espacées mutuellement dans le sens axial.

4. Structure de raccordement étanche selon la revendication 2, caractérisée en ce que les nervures d'étanchéité (4) faisant partie intégrale du corps annulaire de raccordement sont présentes, respectivement, à la surface circonférentielle intérieure et extérieure de ladite bague.

5. Structure de raccordement étanche selon une des revendications précédentes, caractérisée en ce que les nervures d'étanchéité s'étendent radialement avant l'introduction du tuyau (1).

FIG.1

FIG.2

# F I G. 4

# F I G. 3

EP 0 224 188 B1

FIG.5

FIG.6

FIG.7

EP 0 224 188 B1

FIG.8

FIG.10

FIG.9